Europäisches Patentamt

European Patent Office

Office européen des brevets

(11) Publication number: **0 463 178 A1**

## EUROPEAN PATENT APPLICATION
### published in accordance with Art. 158(3) EPC

(21) Application number: **91902744.1**

(22) Date of filing: **18.01.91**

(86) International application number:
**PCT/JP91/00052**

(87) International publication number:
**WO 91/10530 (25.07.91 91/17)**

(51) Int. Cl.5: **B23H 7/10**

(30) Priority: **18.01.90 JP 7187/90**

(43) Date of publication of application:
**02.01.92 Bulletin 92/01**

(84) Designated Contracting States:
**CH DE LI**

(71) Applicant: **FANUC LTD.**
**3580, Shibokusa Aza-Komanba, Oshino-mura**
**Minamitsuru-gun, Yamanashi 401-05(JP)**

(72) Inventor: **HIGASHI, Izumi Fanuc Dai-3**
**Vira-karamatsu**
**3527-1, Shibokusa Oshino-mura**
**Minamitsuru-gun Yamanashi 401-05(JP)**

(74) Representative: **Billington, Lawrence Emlyn**
**Haseltine Lake & Co Hazlitt House 28,**
**Southampton Buildings Chancery Lane**
**London WC2A 1AT(GB)**

(54) **WIRE TENSION CONTROLLING APPARATUS.**

(57) This invention relates to a wire tension controlling apparatus which displays an alarm message when any abnormality occurs in a brake device for generating a wire tension by applying a braking force to a wire, and makes it easy to determine abnormality of the brake device. An output voltage of an inverting amplifier (4) for inverting the sign of a set wire tension voltage (Tc) from a numeric controller (CNC) is divided in a predetermined ratio by a voltage divider (R10, R11) and is compared with a detected wire tension voltage (Tf) from a tension detector by comparator (CP). When the wire tension drops remarkably due to the failure or deterioration of performance of the brake device (B), the detected wire tension voltage is lowered below the output voltage of the voltage divider and the output of an inverter (I1) disposed on the downstream of the comparator falls to a low level. Then, a light emitting diode emits light and an alarm signal is applied from a photo-transistor to the numeric controller, so that the numeric controller lets a display unit display an alarm message representing abnormality of the brake device on its screen.

EP 0 463 178 A1

## Technical Field

The present invention relates to a wire-cut electrical discharge machine, and more particularly, to a wire tension control apparatus having a function to display an alarm message when an abnormality occurs in a brake unit arranged to generate a wire tension.

## Background Art

In a wire-cut electrical discharge machine which applies a braking force to a running wire by means of, e.g., an electromagnetic brake unit to generate a wire tension, it is conventionally known to control the wire tension in a feedback manner. For example, in an electrical discharge machine disclosed in International Patent Publication No. WO89/07031 (corresponding to Japanese Provisional Patent Publication No. 1-199726), a load acting on a swingable cantilever through a wire guide roller, rockably supported by the cantilever, is detected as a wire tension by means of a load cell, and a braking force is controlled in accordance with the difference between the detected wire tension and a set wire tension, whereby an actual wire tension is feedback-controlled to the set value.

If the brake unit of the electrical discharge machine of this type goes wrong or is lowered in performance, the wire tension cannot be adjusted to the set value. In such a case, electrical discharge machining is continued with the wire tension reduced, for example, so that machining accuracy lowers. Conventionally, therefore, the wire tension is frequently measured by means of a tensiometer to determine whether or not the wire tension is adjusted to the set value, and it is concluded that the brake unit is in out of order or lowered in performance when the measured wire tension is greatly deviated from the set value. Conventionally, in this manner, the wire tension must be frequently measured in order to discriminate the presence/absence of an abnormal state of the brake unit, and this is a troublesome task.

## Disclosure of the Invention

The object of the present invention is to provide a wire tension control apparatus capable of displaying an alarm message when a brake unit goes wrong, thereby facilitating a discrimination of an abnormal state of the brake unit.

In order to achieve the above object, according to the present invention, there is provided a wire tension control apparatus for use in a wire-cut electrical discharge machine for feedback-controlling a braking force, applied from a brake unit to a wire, in accordance with a wire tension detected by means of a tension sensor, so as to adjust an actual wire tension to a set wire tension. The wire tension control apparatus comprises discriminating means for determining whether or not the ratio of the detected wire tension to the set wire tension is lower than a predetermined ratio, a display unit for displaying an alarm message indicative of an abnormality of the brake unit, and display control means for causing the display unit to display the alarm message when it is determined that the wire tension ratio is lower than the predetermined ratio.

According to the present invention, as described above, the alarm message indicative of the abnormality of the brake unit is displayed when it is concluded that the ratio of the detected wire tension to the set wire tension is lower than the predetermined ratio, so that the presence/absence of the abnormal state of the brake unit can be discriminated without the need of frequently measuring the wire tension, whereby a lowering of machining accuracy, attributable to a reduction of the wire tension caused by the abnormal state of the brake unit, can be prevented.

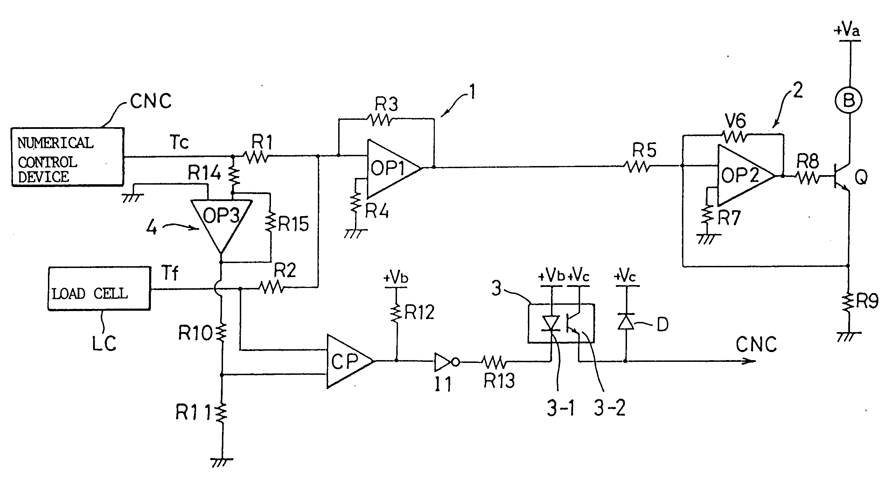

## Brief Description of the Drawing

The single drawing is a circuit diagram showing the principal part of a wire tension control apparatus according to one embodiment of the present invention.

## Best Mode of Carrying Out the Invention

A wire-cut electrical discharge machine is so designed as to cause a wire delivered from a wire supply bobbin to run along a wire path, which is composed of a pinch roller, a brake roller, a guide roller, upper and lower guides, etc., and causes electrical discharge to generate between the wire and a workpiece, thereby effecting electrical discharge machining. The electrical discharge machine comprises an electromagnetic brake unit, shown by reference symbol B in the accompanying drawing, for braking the brake roller to apply a braking force on the wire, to thereby generate a wire tension, and a wire tension sensing unit which includes a cantilever. The cantilever is swingably supported at its one end, supports the wire guide roller for rotation at its other end, and is supported at its intermediate portion by a pressure sensing section of a load cell LC, for use as a tension sensor.

Further, the electrical discharge machine comprises a numerical control device CNC, which accommodates therein a computer, for controlling the operation of the electrical discharge machine and delivering a command voltage Tc, which is indicative of a set wire tension, and a wire tension control apparatus for driving the electromagnetic brake unit B in accordance with an output voltage Tf of the tension sensor, which is indicative of a detected wire tension, and a set wire tension voltage Tc, so as to feedback-control an actual wire tension to the set wire tension. The numerical control device CNC includes a manual data input unit MDI with a CRT display unit, and functions as display control means of the wire tension control apparatus for controlling the operation of the display unit.

As shown in the drawing, the wire tension control apparatus comprises a first operational amplifier OP1 for use as a differential amplifier 1 for outputting the difference between the set wire tension voltage Tc and the detected wire tension voltage Tf, a second operational amplifier OP2 for use as an amplifier 2 for amplifying the output of the operational amplifier OP1 and a transistor Q for controlling an exciting current flowing through an exciting coil of the electromagnetic brake unit B. More specifically, the operational amplifier OP1 has its first input terminal connected to an output circuit of the numerical control device CNC through a resistor R1 and connected to the load cell LC through a resistor R2, and has its second input terminal grounded through a resistor R4. The output terminal of the first operational amplifier OP1 is connected to a first input terminal of this amplifier through a resistor R3, and is connected to a first input terminal of the second operational amplifier OP2 through a resistor R5. The second operational amplifier OP2 has its second input terminal grounded through a resistor R7, and its output terminal connected to the first input terminal of this amplifier through a resistor R6 and connected to the base of the transistor Q through a resistor R8. The collector of the transistor Q is connected to one end of the exciting coil of the electromagnetic brake unit B the other end of which is connected to a power source +Va, and the junction of the first input terminal of the second operational amplifier OP2 and the emitter of the transistor Q is grounded through a resistor R9.

Further, the wire tension control apparatus comprises a third operational amplifier OP3 for use as an inverting amplifier 4 for inverting the sign of the set wire tension voltage Tc, a voltage divider composed of resistors R10 and R11 whose resistance ratio ranges, e.g., from 9:1 to 8:2, and used to obtain a voltage at 10% to 20% of the output voltage of the operational amplifier OP3, and a comparator CP for comparing the divider output voltage and the detected wire tension voltage Tf. More specifically, the third operational amplifier OP3 has its first input terminal connected to the output circuit of numerical control device through a resistor R14, its second input terminal grounded, and its output terminal connected to a resistor R10 and connected to the first input terminal through a resistor R15. The comparator CP has its first input terminal connected to the load cell LC and its second input terminal connected to the junction of the resistors R10 and R11. One end of the resistor R11 is grounded. The output terminal of the comparator CP is connected to a power source +Vb through a resistor R12, and is also connected, through an inverter 11 and a resistor R13, to the cathode of a light emitting diode 3-1 of a photocoupler 3 whose anode is connected to the power source +Vb. A phototransistor 3-2 of the photocoupler 3 has its collector connected to a power source +Vc, and its emitter connected to an input circuit of the numerical control device and to the anode of a diode D whose cathode is connected to the power source +Vc.

The following is a description of the operation of the electrical discharge machine with the above-described construction.

An operator operates a keyboard of the manual data input unit MDI, thereby setting the set wire tension in the numerical control device CNC, and then causes the operation of the electrical discharge machine to start. During the operation of the electrical discharge machine, the output of the first operational amplifier OP1, which is indicative of the difference between the set wire tension voltage Tc from the numerical control device CNC and the detected wire tension voltage Tf from the load cell LC, is applied to the transistor Q through the second operational amplifier OP2. As a result, an exciting current corresponding to the differential voltage (Tc - Tf) flows through the exciting coil of the electromagnetic brake unit B, and the braking force is applied to the running wire by means of the electromagnetic brake unit B, thereby generating the wire tension. The wire tension acts on the cantilever through the wire guide roller on the one end of the cantilever, thereby swinging the cantilever. A load corresponding to the actual wire tension acts on the load cell LC, and the detected wire tension voltage Tf corresponding to this load is delivered from the load cell. The detected wire tension voltage Tf is applied to the first operational amplifier OP1, and is also applied to the first input terminal of the comparator CP. The voltage divider output voltage, whose sign is opposite to that of the set wire tension voltage Tc and whose magnitude is 10% to 20% of that of the voltage Tc, is applied to the second input terminal of the comparator CP through the third operational amplifier OP3.

While the electromagnetic brake unit B is normally operating, the actual wire tension is controlled so as to be equal to the set wire tension, so that the detected wire tension voltage Tf, which is applied to the first input terminal of the comparator CP, is higher than the divider output voltage. In other words, the ratio of the detected wire tension to the set wire tension exceeds a predetermined ratio of 1:10 to 1:5. In this case, a low level output is delivered from the comparator CP, so that the output of the inverter I1 goes high. As a result, the light emitting diode 3-1 of the photocoupler 3 is de-energized, so that no current flows through the phototransistor 3-2 of the photocoupler 3.

If the electromagnetic brake unit B goes wrong or is lowered in performance so that the wire tension control by means of the brake unit B becomes unusual, it typically results in a substantial reduction of the wire tension to less than 10% of the set wire tension. In this case, the detected wire tension voltage Tf is lower than the divider output voltage, a high-level output is delivered from the comparator CP, and the output of the inverter I1 goes low. Thereupon, a driving current flows through the light emitting diode 3-1, thereby causing the light emitting diode to glow. As a result, a current flows through the phototransistor 3-2, that is, an alarm signal, which is indicative of an abnormal state of the brake unit B, is delivered from the photocoupler 3 to the input circuit of the numerical control device CNC. During the operation of the electrical discharge machine, the numerical control device CNC cyclically executes a routine to monitor the presence/absence of the alarm signal, and causes the display unit to display on its CRT screen an alarm message to the effect that the brake unit in trouble, in response to the alarm signal Based on the display of this message, the operator checks or replaces the electromagnetic brake unit B with a new one.

The present invention is not limited to the embodiment described above, and various modifications may be effected therein.

Although the load cell is used in the above embodiment, for example, any other tension sensor may be used instead. Further, the division ratio of the set wire tension voltage Tc may be variably set by using variable resistor means for one or both of the resistors R10 and R11 which constitute the voltage divider. Furthermore, the operation of the electrical discharge machine may be automatically stopped in response to the alarm signal from the photocoupler 3.

## Claims

1. A wire tension control apparatus for use in a wire-cut electrical discharge machine for feedback-controlling a braking force, applied from a brake unit to a wire, in accordance with a wire tension detected by means of a tension sensor, so as to adjust an actual wire tension to a set wire tension, comprising:

discriminating means for determining whether or not the ratio of said detected wire tension to said set wire tension is lower than a predetermined ratio;

a display unit for displaying an alarm message indicative of an abnormality of the brake unit; and

display control means for causing said display unit to display said alarm message when it is determined that the wire tension ratio is lower than the predetermined ratio.

2. A wire tension control apparatus according to claim 1, wherein the predetermined ratio is set at a value indicative of a substantial reduction of the wire tension attributable to the abnormality of the brake unit.

3. A wire tension control apparatus according to claim 1, wherein said discriminating means includes an inverting amplifier for inverting the sign of a voltage indicative of the set wire tension, a voltage divider for dividing an output voltage of said inverting amplifier in the predetermined ratio, and a comparator for comparing an output voltage of said tension sensor, indicative of said detected wire tension, and an output voltage of said voltage divider.

# INTERNATIONAL SEARCH REPORT

International Application No  PCT/JP91/00052

**I. CLASSIFICATION OF SUBJECT MATTER (if several classification symbols apply, indicate all)** ⁶

According to International Patent Classification (IPC) or to both National Classification and IPC

Int. Cl⁵  B23H7/10

**II. FIELDS SEARCHED**

| Minimum Documentation Searched ⁷ | |
|---|---|
| Classification System | Classification Symbols |
| IPC | B23H7/10 |

Documentation Searched other than Minimum Documentation
to the Extent that such Documents are Included in the Fields Searched ⁸

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | JP, A, 63-256316 (Mitsubishi Electric Corp.), October 24, 1988 (24. 10. 88), (Family: none) | 1-3 |
| A | JP, A, 58-202726 (Makino Milling Seisakusho K.K.), November 26, 1983 (26. 11. 83), (Family: none) | 1-3 |
| A | JP, A, 57-178619 (Sodick Co., Ltd.), November 2, 1982 (02. 11. 82), (Family: none) | 1-3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 8, 1991 (08. 04. 91) | April 22, 1991 (22. 04. 91) |

| International Searching Authority | Signature of Authorized Officer |
|---|---|
| Japanese Patent Office | |

Form PCT/ISA/210 (second sheet) (January 1985)